# EUROPÄISCHE PATENTSCHRIFT

(11) **EP 3 414 447 B1**
(45) Veröffentlichungstag und Bekanntmachung des Hinweises auf die Patenterteilung: **01.09.2021**
(21) Anmeldenummer: 16750427.3
(22) Anmeldetag: 02.08.2016
(51) Int. Cl.: F02M 25/025, F02M 25/022, F02D 41/00, F02B 47/02, B01D 15/36

(54) **SYSTEM UND VERFAHREN ZUR BEVORRATUNG UND ZUFÜHRUNG VON WASSER AN EINE BRENNKRAFTMASCHINE EINES KRAFTFAHRZEUGES**
SYSTEM AND METHOD FOR STORING WATER AND SUPPLYING WATER TO AN INTERNAL COMBUSTION ENGINE OF A MOTOR VEHICLE
SYSTÈME ET PROCÉDÉ DE STOCKAGE D'EAU ET D'ALIMENTATION D'UN MOTEUR À COMBUSTION INTERNE D'UN VÉHICULE AUTOMOBILE EN EAU

(30) Priorität: 09.02.2016 DE 102016201942
(43) Veröffentlichungstag der Anmeldung: 19.12.2018
(73) Patentinhaber: Kautex Textron GmbH & Co. KG, 53229 Bonn (DE)
(72) Erfinder: HEIDEMEYER, Timm, 50679 Köln (DE); WOLF, Hartmut, 53639 Königswinter (DE)
(74) Vertreter: Richly & Ritschel Patentanwälte PartG mbB
(86) Internationale Anmeldenummer: PCT/EP2016/068469
(87) Internationale Veröffentlichungsnummer: WO 2017/137100

(56) Entgegenhaltungen:
- WO-A1-02/33242
- FR-A1- 2 504 984
- GB-A- 2 109 457
- US-A- 5 125 366
- US-A1- 2003 168 025
- US-A1- 2006 266 307
- US-A1- 2007 001 026
- US-B1- 7 013 845

## Beschreibung

Die Erfindung betrifft ein System zur Bevorratung und Zuführung von Wasser an eine Brennkraftmaschine eines Kraftfahrzeuges, mit wenigstens einer Förderpumpe für das Wasser und mit wenigstens einem Leitungssystem umfassend eine Vorlaufleitung zu einem Verbraucher und wenigstens einer Rücklaufleitung in den Vorratsbehälter.

Bei Wasser-Injektions-Tanksystemen ist vorgeschrieben, deionisiertes oder demineralisiert Wasser mit einem sehr niedrigen Leitwert (kleiner 10 ps/cm) zu verwenden. In Wasser enthaltene Mineralien setzen Ventile, Pumpen und Injektoren verhältnismäßig schnell zu. Deswegen ist es erforderlich, zur Aufnahme des Wassers vorgesehene Vorratsbehälter mit deionisiertem oder demineralisiertem Wasser zu befüllen. Das ist aufwendig und insbesondere für den Endkunden verhältnismäßig lästig.

US 2007/001026 A1 beschreibt eine Wasserbereitstellungsvorrichtung aus dem Stand der Technik.

Der Erfindung liegt daher die Aufgabe zugrunde, ein System zur Bevorratung und Zuführung von Wasser an eine Brennkraftmaschine eines Kraftfahrzeuges bereitzustellen, welches auch mit normalem Leitungswasser befüllt werden kann.

Die Aufgabe wird gelöst mit den Merkmalen des Anspruchs 1, der auf ein System zur Bevorratung und Zuführung von Wasser an einer Brennkraftmaschine eines Kraftfahrzeuges gerichtet ist, sowie mit den Merkmalen des Anspruchs 9, der auf ein Verfahren zur Zuführung von Wasser an die Brennkraftmaschine eines Kraftfahrzeuges unter Verwendung des Systems gerichtet ist.

Vorteilhafte Ausgestaltungen der Erfindung ergeben sich aus den Unteransprüchen.

Nach einem Gesichtspunkt der Erfindung ist ein System zur Bevorratung und Zuführung von Wasser an eine Brennkraftmaschine eines Kraftfahrzeuges mit einem Vorratsbehälter für das Wasser, mit wenigstens einer Förderpumpe für das Wasser und mit wenigstens einem Leitungssystem umfassend wenigstens eine Vorlaufleitung von dem Vorratsbehälter zu einem Verbraucher, der vorzugsweise in Form von wenigstens einer Dosiereinheit ausgebildet ist, und wenigstens einer Rücklaufleitung in den Vorratsbehälter sowie mit Mitteln zur Demineralisierung des Wassers, wobei die Mittel zur Demineralisierung des Wassers innerhalb des Vorratsbehälters oder an dem Vorratsbehälter oder in dem Leitungssystem oder mit dem Leitungssystem kommunizierend angeordnet sind,
wobei als Mittel zur Demineralisierung des Wassers wenigstens ein Filter, vorzugsweise als Mischbettfilter, vorgesehen ist und dass der Filter innerhalb der Vorlaufleitung oder der Rücklaufleitung angeordnet ist.

Als Verbraucher im Sinne der vorliegenden Erfindung können eine oder mehrere Dosiereinheiten für ein Wasserinjektionssystem an eine Brennkraftmaschine, beispielsweise eines Personenkraftfahrzeuges vorgesehen sein. Die Dosiereinheiten können eine oder mehrere Injektionsdüsen umfassen.

Eine bevorzugte Variante des Systems gemäß der Erfindung zeichnet sich dadurch aus, dass als Filter ein Mischbettfilter vorgesehen ist.

Als Filter kann beispielsweise eine austauschbare Filterkassette vorgesehen sein, die innerhalb des Vorratsbehälters angeordnet ist.

Alternativ kann als Filter eine austauschbare Filterpatrone vorgesehen sein, die innerhalb des Leitungssystems angeordnet ist oder die an das Leitungssystem angeschlossen ist.

Bei einer vorteilhaften Variante des Systems gemäß der Erfindung ist vorgesehen, dass die Filterpatrone in der Vorlaufleitung in Strömungsrichtung des Vorlaufs, vorzugsweise der Förderpumpe vorgeschaltet, angeordnet ist.

Grundsätzlich kann die Filterpatrone auch der Förderpumpe nachgeschaltet sein. Dies ist insbesondere deshalb vorteilhaft, weil die Förderpumpe dann besser den Widerstand der Filterpatrone überwinden kann. Der Fachmann wird verstehen, dass ein Widerstand in einem Leitungssystem druckseitig der Pumpe besser kompensierbar ist als saugseitig der Pumpe.

Die Filterpatrone kann unmittelbar außen an den Vorratsbehälter angeschlossen sein, wobei bei dieser Variante zweckmäßigerweise die Vorlaufleitung an die Filterpatrone angeschlossen ist.

Bei einer vorteilhaften Ausgestaltung des Systems gemäß der Erfindung ist vorgesehen, dass die Filterpatrone ein mit Wasser durchströmbares Gehäuse mit einer Filterpackung umfasst.

Zweckmäßigerweise umfasst das Mischbettfilter des Systems gemäß der Erfindung wenigstens ein Mischbettharz.

Das Mischbettfilter kann beispielsweise als Mehrkammerfilter, als Sandwichfilter oder in Form einer oder mehrere hintereinandergeschaltete Membranen oder alternativ in Form eines Mischbettharzes, welches sowohl Kationen- als auch AnionenAustauschharze enthält, ausgebildet sein.

Vorzugsweise ist das Mischbettharz ausgewählt aus einer Gruppe von Harzen umfassend saure Kationenaustauscher und basische Anionenaustauscher des Typs CA²⁺, NI²⁺, MG²⁺, SO₄²⁻, HSO₄⁻ und NO₃⁻. Die Erfindung betrifft weiterhin ein Verfahren zur Zuführung von Wasser an die Brennkraftmaschine eines Kraftfahrzeuges unter Verwendung des oben beschriebenen Systems.

Insbesondere wird das Wasser vor der Zuführung an den Verbraucher demineralisiert.

Das Verfahren gemäß der Erfindung umfasst auch das dosierte und intermittierende Zuführen von demineralisiertem Wasser an einen oder mehrere Verbraucher. In diesem Falle kommunizieren die Mittel zur Demineralisierung des Wassers mit dem Leitungssystem, diese sind aber nicht notwendigerweise innerhalb eines Vorlaufs oder Rücklaufs des Leitungssystems angeordnet, sondern beispielsweise der Förderpumpe nachgeschaltet in einer Zuführleitung zu dem Verbraucher.

Die Erfindung wird nachstehend anhand von in den Zeichnungen dargestellten Ausführungsbeispielen erläutert.

Es zeigen
- Figur 1: ein Wasserinjektionssystem nach einem ersten Ausführungsbeispiel der Erfindung,
- Figur 2: ein Wasserinjektionssystem nach einem zweiten Ausführungsbeispiel der Erfindung,
- Figur 3: ein Wasserinjektionssystem (nicht Teil der beanspruchten Erfindung) und
- Figur 4: ein Wasserinjektionssystem nach einem dritten Ausführungsbeispiel der Erfindung.

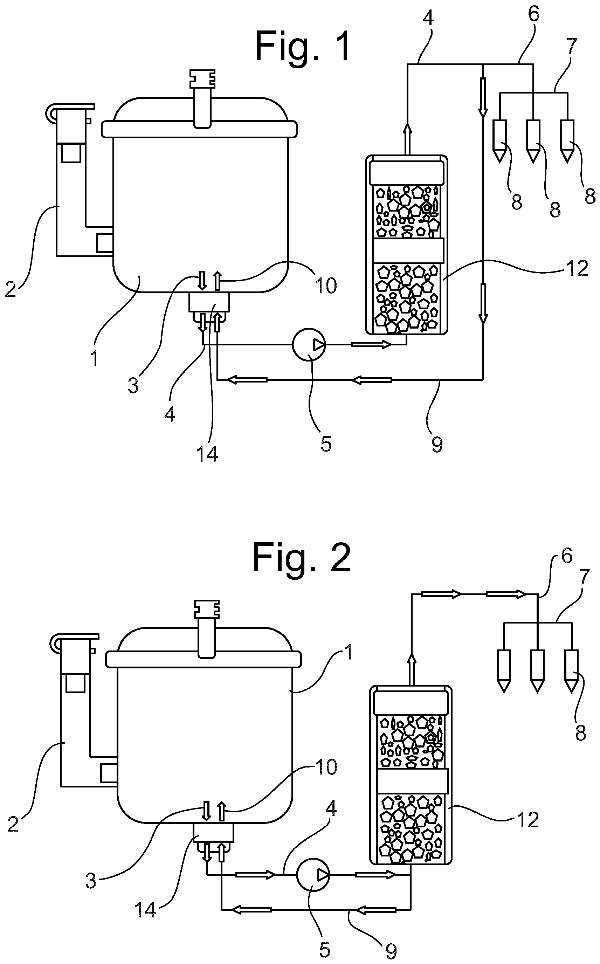

Das in Figur 1 schematisch dargestellte System umfasst einen Vorratsbehälter 1 für Wasser mit einem Einfüllstutzen 2, mit Mitteln zur Belüftung des Vorratsbehälters 1 sowie mit Mitteln zur Füllstandsdetektion. Der Vorratsbehälter 1 ist über einen Vorlaufanschluss 3 an eine Vorlaufleitung 4 angeschlossen. In der Vorlaufleitung 4 ist eine Förderpumpe 5 angeordnet, die über eine Zuführleitung 6 Wasser an einen Verteiler 7 liefert, an welchen wiederum Injektionsdüsen 8 als Dosierteinheiten bzw. als Verbraucher angeschlossen sind.

Das System umfasst weiterhin eine Rücklaufleitung 9, mit welcher nicht von den Injektionsdüsen 8 abgenommenes Wasser in den Vorratsbehälter 1 über einen Rücklaufanschluss 10 zurückgeführt werden kann. Dem Rücklaufanschluss 10 ist ein Mehrwegeventil 14 vorgeschaltet, mit welchem das Leitungssystem umfassend die Vorlaufleitung 4 und eine Rücklaufleitung 9 sowie gegebenenfalls zu Servicezwecken der Vorratsbehälter 1 entleert werden kann. Der Rücklaufanschluss 10 ist innerhalb des Volumens des Vorratsbehälters 1 mit einer Drossel versehen, die eine Entspannung des unter Druck stehenden Rücklaufs in den Vorratsbehälter 1 ermöglicht.

In dem Vorratsbehälter ist ein nicht näher bezeichneter Leitfähigkeitsdetektor angeordnet, der die Leitfähigkeit des im Vorratsbehälter 1 befindlichen Wassers detektiert und gegebenenfalls ein entsprechendes Warnsignal erzeugt.

Bei dem Ausführungsbeispiel gemäß Figur 1 ist in der Vorlaufleitung 4 hinter der Förderpumpe 5, also druckseitig der Förderpumpe 5, eine austauschbare Filterpatrone 12 vorgesehen, die mit einem Mischbettharz gefüllt ist, das beispielsweise stark basische Anionen und stark saure Kationen umfasst, welche die im Leitungswasser befindlichen Ionen aufnehmen, sodass das im Vorratsbehälter 1 befindliche Wasser während der Förderung mit der Förderpumpe 5 und bei der Entnahme aus dem Vorratsbehälter 1 entsalzt wird.

Das in der Filterpatrone 12 vorgesehene Mischbettharz kann ein granuläres Material sein. Dies kann beispielsweise ein Einweg-Mischbettharz sein, das beispielsweise im Handel unter der Handelsbezeichnung Resinex bekannt ist und einen Ionenaustausch bewirkt.

Eine alternative Ausgestaltung des Systems gemäß der Erfindung ist in Figur 2 dargestellt. In Figur 2 sind Bauteile, die denjenigen des Ausführungsbeispiels gemäß Figur 1 funktional entsprechen, mit gleichen Bezugszeichen versehen.

Das Ausführungsbeispiel gemäß Figur 2 unterscheidet sich von demjenigen gemäß Figur 1 dadurch, dass die Filterpatrone 12 in der Zuführleitung 6 des Systems austauschbar eingesetzt ist. Dabei ist die Filterpatrone 12 ebenfalls der Förderpumpe 5 nachgeschaltet.

Bei dem in Figur 2 dargestellten System ist vorgesehen, das Wasser durch die Filterpatrone 12 intermittierend und dosiert den Injektionsdüsen 8 zuzuführen. Die Filterpatrone 12 ist dabei nicht in den Kreislauf, d.h. in die Vorlaufleitung 4 und in die Rücklaufleitung 9 integriert. Gleichwohl ist die Filterpatrone 12 den Injektionsdüsen 8 in der Zuführleitung 6 vorgeschaltet angeordnet.

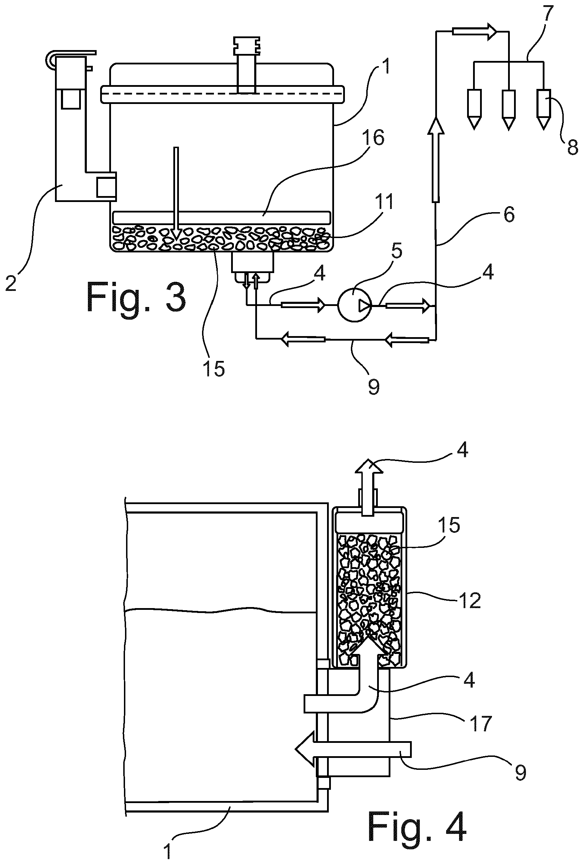

Das in Figur 3 dargestellte System, das nicht Teil der beanspruchten Erfindung ist, unterscheidet sich von demjenigen gemäß den Figuren 1 und 2 dadurch, dass als Filter eine austauschbare Filterkassette oder Filterpackung 11 innerhalb des Vorratsbehälters 1 angeordnet ist. Die Filterpackung 11 kann ein Mischbett 15 und wenigstens ein dem Mischbett vorgelagertes, d.h. stromaufwärts angeordnetes Filtermedium 16 umfassen. Das Filtermedium 16 kann als gewebtes oder gelegtes Filtermedium, als Filtervlies oder dergleichen ausgebildet sein.

Die Filterpackung 11 bzw. das Mischbett 15 und das Filtermedium 16 sind zweckmäßigerweise an dem Boden des Vorratsbehälters 1 den Boden abdeckend angeordnet. Die Filterpackung 11 ist vorzugsweise saugseitig der Förderpumpe 5 angeordnet.

Eine weitere vorteilhafte Variante des Systems gemäß der Erfindung ist in Figur 4 dargestellt. Die in Figur 4 dargestellte Variante des Systems unterscheidet sich von denjenigen Varianten, die in den Figuren 1 bis 3 beschrieben sind, dadurch, dass die Filterpatrone 12 an einer Seitenwand des Vorratsbehälters 1 angeordnet ist und dort unmittelbar an ein den Vorratsbehälter verschließendes Anschlussmodul 17 angeschlossen ist. Das Anschlussmodul 17 kann beispielsweise als Mehrwegeventil zur Steuerung der Entnahme von Flüssigkeit aus dem Vorratsbehälter 1 und/oder zur Entleerung und/oder zur Belüftung des Leitungssystems vorgesehen sein. Bei dieser Variante des Systems ist die Filterpatrone 12 saugseitig der nicht dargestellten Förderpumpe 5 angeordnet.

Die Filterpatrone 12 gemäß dem Ausführungsbeispiel nach den Figuren 2 und 4 kann ebenso ein Mischbett 15 umfassen, wie die Filterpatrone 12 gemäß dem Ausführungsbeispiel nach Figur 1.

### Bezugszeichenliste

- 1: Vorratsbehälter
- 2: Einfüllstutzen
- 3: Vorlaufanschluss
- 4: Vorlaufleitung
- 5: Förderpumpe
- 6: Zuführleitung
- 7: Verteiler
- 8: Injektionsdüsen
- 9: Rücklaufleitung
- 10: Rücklaufanschluss
- 11: Filterpackung
- 12: Filterpatrone
- 13: Einsatz
- 14: Mehrwegeventil
- 15: Mischbett
- 16: Filtermedium
- 17: Anschlussmodul

## Patentansprüche

1. System zur Bevorratung und Zuführung von Wasser an eine Brennkraftmaschine eines Kraftfahrzeuges mit einem Vorratsbehälter (1) für das Wasser, mit wenigstens einer Förderpumpe (5) für das Wasser und mit wenigstens einem Leitungssystem umfassend wenigstens eine Vorlaufleitung (4) von dem Vorratsbehälter (1) zu einem Verbraucher, der vorzugsweise in Form von wenigstens einer Dosiereinheit ausgebildet ist, und wenigstens einer Rücklaufleitung (9) in den Vorratsbehälter (1) sowie mit Mitteln zur Demineralisierung des Wassers, wobei die Mittel zur Demineralisierung des Wassers innerhalb des Vorratsbehälters (1) oder an dem Vorratsbehälter (1) oder in dem Leitungssystem oder mit dem Leitungssystem kommunizierend angeordnet sind,
**dadurch gekennzeichnet, dass**
als Mittel zur Demineralisierung des Wassers wenigstens ein Filter, vorzugsweise als Mischbettfilter (15), vorgesehen ist und dass der Filter innerhalb der Vorlaufleitung oder der Rücklaufleitung angeordnet ist.

2. System nach Anspruch 1 oder 2, **dadurch gekennzeichnet, dass** als Filter eine austauschbare Filterpatrone (12) vorgesehen ist.

3. System nach Anspruch 2, **dadurch gekennzeichnet, dass** die Filterpatrone (12) in der Vorlaufleitung (4), in Strömungsrichtung des Vorlaufs vorzugsweise der Förderpumpe (5) vorgeschaltet, angeordnet ist.

4. System nach einem der Ansprüche 2 oder 3, **dadurch gekennzeichnet, dass** die Filterpatrone (12) ein mit Wasser durchströmbares Gehäuse mit einer Filterpackung umfasst.

5. System nach einem der Ansprüche 2 bis 4, **dadurch gekennzeichnet, dass** das Mischbettfilter wenigstens ein Mischbettharz umfasst.

6. System nach einem der Ansprüche 2 bis 4, **dadurch gekennzeichnet, dass** das Mischbettfilter als Mehrkammerfilter oder Mehrmembranfilter ausgebildet ist.

7. System nach Anspruch 5, **dadurch gekennzeichnet, dass** das Mischbettharz Kationen- und Anionenaustauschharze umfasst.

8. System nach einem der Ansprüche 5 oder 7, **dadurch gekennzeichnet, dass** das Mischbettharz ausgewählt ist aus einer Gruppe von Harzen umfassend saure Kationenaustauscher und basische Anionenaustauscher des Typs CA²⁺, NI²⁺, MG²⁺, SO₄²⁻, HSO₄⁻ und NO₃⁻.

9. Verfahren zur Zuführung von Wasser an die Brennkraftmaschine eines Kraftfahrzeuges, wobei das Wasser mittels des Filters demineralisiert wird und **gekennzeichnet durch** die Verwendung eines Systems nach einem der Ansprüche 1 bis 8.

10. Verfahren nach Anspruch 9, **dadurch gekennzeichnet, dass** das Wasser vor der Zuführung an den Verbraucher demineralisiert wird.

## Claims

1. A system for storing and supplying water to an internal combustion engine of a motor vehicle with a reservoir (1) for the water, with at least a delivery pump (5) for the water, and with at least a pipeline system comprising at least a feed line (4) from the reservoir (1) to a consumer which is preferably designed in the form of at least a metering unit, and at least a return line (9) into the reservoir (1) as well as with means for demineralizing the water, wherein the means for demineralizing the water are arranged inside the reservoir (1) or on the reservoir (1) or in the pipeline system or communicating with the pipeline system, **characterized in that** at least one filter is provided, preferably as a mixed bed filter (15), as the means for demineralizing the water and that the filter is arranged in the feedline or the return line.

2. The system as claimed in claims 1 or 2 **characterized in that** an exchangeable filter cartridge (12) is provided as the filter.

3. The system as claimed in claim 2 **characterized in that** the filter cartridge (12) is arranged in the feed line (4), preferably switched in before the delivery pump (5) in the flow direction of the delivery.

4. The system as claimed in one of claims 2 to 3 **characterized in that** the filter cartridge (12) comprises a housing with a filter pack through which water can flow.

5. The system as claimed in one of claims 2 to 4 **characterized in that** the mixed bed filter comprises at least one mixed bed resin.

6. The system as claimed in one of claims 2 to 5 **characterized in that** the mixed bed filter is formed as a multi-chamber filter or multi-membrane filter.

7. The system as claimed in claim 5 **characterized in that** the mixed bed resin comprises cation and anion exchange resins.

8. The system as claimed in one of claims 5 or 7 **characterized in that** the mixed bed resin is selected from a group of resins comprising acidic cation exchangers and basic anion exchangers of the type CA²⁺, NI²⁺, MG²⁺, SO₄²⁻, HSO₄⁻, and NO₃⁻.

9. A method for supplying water to the internal combustion engine of a motor vehicle, wherein the water is demineralized by the filter und characterzied by using a system according to claims 1 to 8.

10. The method as claimed in claim 9 **characterized in that** the water is demineralized before supplying to the consumer.

## Revendications

1. Système de stockage et de livraison d'eau d'un moteur à combustion interne d'un véhicule automobile comportant un réservoir de stockage (1) pour l'eau, comportant au moins une pompe de circulation (5) pour l'eau et comportant au moins un système de conduite comprenant au moins une conduite d'alimentation (4) du récipient de stockage (1) à un consommateur, qui est de préférence conçue sous la forme d'au moins une unité de dosage, et au moins une conduite de retour (9) dans le récipient de stockage (1) ainsi que des moyens permettant de déminéraliser l'eau, les moyens permettant de déminéraliser l'eau étant disposés à l'intérieur du réservoir de stockage (1) ou sur le réservoir de stockage (1) ou dans le système de conduite ou en communication avec le système de conduite, **caractérisé en ce que**
au moins un filtre, de préférence en tant que filtre à lit mixte (15), est prévu comme moyen permettant de déminéraliser l'eau et **en ce que** le filtre est disposé à l'intérieur de la conduite d'alimentation ou de la conduite de retour.

2. Système selon la revendication 1 ou 2, **caractérisé en ce qu'**une cartouche filtrante (12) remplaçable est prévue en tant que filtre.

3. Système selon la revendication 2, **caractérisé en ce que** la cartouche filtrante (12) est disposée dans la conduite d'alimentation (4), de préférence en amont de la pompe de circulation (5) dans le sens d'écoulement de l'alimentation.

4. Système selon l'une des revendications 2 ou 3, **caractérisé en ce que** la cartouche filtrante (12) comprend un boîtier avec une garniture filtrante à travers laquelle l'eau peut s'écouler.

5. Système selon l'une des revendications 2 à 4, **caractérisé en ce que** le filtre à lit mixte comprend au moins une résine à lit mixte.

6. Système selon l'une des revendications 2 à 4, **caractérisé en ce que** le filtre à lit mixte est réalisé en tant que filtre à chambres multiples ou à membranes multiples.

7. Système selon la revendication 5, **caractérisé en ce que** la résine à lit mixte comprend des résines échangeuses de cations et d'anions.

8. Système selon l'une des revendications 5 ou 7, **caractérisé en ce que** la résine à lit mixte est choisie dans un groupe de résines comprenant des échangeurs de cations acides et des échangeurs d'anions basiques de type CA²⁺, NI²⁺, MG²⁺, SO₄²⁻, HSO₄⁻ et NO₃⁻.

9. Procédé de livraison d'eau du moteur à combustion interne d'un véhicule automobile, l'eau étant déminéralisée au moyen du filtre, et **caractérisé par** l'utilisation d'un système selon l'une des revendications 1 à 8.

10. Procédé selon la revendication 9, **caractérisé en ce que** l'eau est déminéralisée avant d'être livrée au consommateur.
